# EUROPEAN PATENT APPLICATION

(11) **EP 0 734 127 A1**
(43) Date of publication of application: **25.09.1996**
(21) Application number: 96104596.0
(22) Date of filing: 22.03.1996
(51) Int. Cl.: H04B 10/135

(54) **Apparatus for digital transmissions over optical fibers**

(30) Priority: 24.03.1995 IT PD950063
(71) Applicant: GHT GIOTTO HIGH TECHNOLOGY S.r.l., 35127 Padova (IT)
(72) Inventor: Franco, Pierluigi, 35100 Padova (IT); Midrio, Michele, 35100 Padova (IT)
(74) Representative: Modiano, Guido, Dr.-Ing.

(57) **Abstract**

The present invention relates to an apparatus for digital transmissions over optical fibers, comprising, in a non-linear propagation mode, the following combination of elements:
-- a laser transmitter;
-- a polarization modulator;
-- a sequence of optical fibers;
-- a receiver with polarization controller.

## Description

The present invention relates to an apparatus for digital transmissions over optical fibers.

Communications by transmission over optical fibers is currently becoming increasingly widespread.

It is known that transmission by means of photons along optical fibers is usually of the digital type, in which the information units, termed "bits", are discrete, and it essentially requires the following elements: a transmitter, a modulator, a transmission medium, and a receiver.

The transmitter is a device that produces and emits a sequence of pulses at a specific repeat rate.

A sequence of time intervals, termed "time slots", can be identified at its output; each time slot is occupied by one pulse.

The pulses generated by the transmitter enter the modulator, which has the purpose of introducing in each pulse an information content constituting the subject of the transmission.

Various modulation methods are currently in use, the simplest being the suppression of some pulses (on-off).

However, in addition to transmission on two levels (pulse or pulse suppression), multilevel modulation modes are currently becoming widespread, which introduce more than one data bit within a single pulse.

Multilevel modulations currently in use entail pulse amplitude multiplication or phase modulation or frequency modulation, thus introducing more than two possible states in said pulse.

As regards the transmission medium, namely optical fibers, it is substantially identified by two parameters: attenuation and chromatic dispersion.

Attenuation is responsible for signal power decrease and its typical values are approximately 0.3 decibels/kilometer if the wavelength at which transmission occurs is approximately 1300 nanometers, whereas it is approximately 0.2 decibels/kilometer when transmission occurs with a wavelength approximately equal to 1550 nanometers.

Indeed due to the lower attenuation obtainable with wavelengths around 1550 nanometers, the current trend is to provide transmission devices that operate in this very wavelength range.

There is also a second reason that causes this wave length range to be preferred; for transmission distances above 40-60 km it is in fact necessary to introduce amplifiers.

A device termed "erbium-doped optical-fiber amplifier" is currently available which allows to achieve amplification at a wavelength around 1500 nanometers, and this amplification is achieved directly at the optical level.

As regards chromatic dispersion, it causes a time spread of the pulses.

If this chromatic dispersion reaches high values, it can cause a shift or overlap of adjacent time slots, causing errors during reception and decoding.

According to the chromatic dispersion parameter, there are substantially two classes of optical fibers which are termed respectively "step index" and "dispersion shifted".

Step index fibers have a dispersion that is close to zero around 1300 nanometers but have a dispersion that is approximately equal to -20ps²/km for wavelengths of 1500 nanometers.

Dispersion shifted fibers, which have been installed more recently, have a dispersion that is close to zero indeed around the 1500-nanometer wavelength.

Consequently, the current trend is to not use step index fibers in favor of dispersion shifted fibers.

As regards the receiver, usually in the optical fiber transmission range it is constituted by a photodiode that is sensitive to the intensity of the signal received, followed by a threshold device.

Devices currently used to transmit information over optical fibers, despite excellently performing their task, cannot be used cheaply to utilize the large existing network of step index fibers which, as mentioned, operate with chromatic dispersions that are equal to zero for wavelengths around 1300 nanometers and are becoming unused due to the above-mentioned reasons.

The principal aim of the present invention is to provide an apparatus for digital transmission over optical fibers the operating costs and transmission quality whereof are competitive with respect to conventional devices and which can use step index fibers that are currently no longer being used.

Accordingly, an object of the present invention is to provide an apparatus that can also use dispersion shifted optical fibers with costs and transmission quality that are competitive with respect to conventional devices.

Another object of the present invention is to provide a transmission apparatus wherein the modulation mode indicates a substantially unchanged propagation of the time shape of the pulse as well as low chromatic dispersion in both of the above-mentioned optical fiber types.

A further object of the present invention is to provide an apparatus for digital transmission over optical fibers having a high transmission capacity.

Another object of the present invention is to provide an apparatus for transmission over optical fibers that uses easily available components.

This aim, these objects, and others which will become apparent hereinafter are achieved by an apparatus for digital transmissions over optical fibers, characterized in that it comprises, in a non-linear propagation mode, the following combination of elements:
-- a laser transmitter;
-- a polarization modulator;
-- a sequence of optical fibers;
-- a receiver with polarization controller.

Further characteristics and advantages of the present invention will become apparent from the description of an embodiment thereof, illustrated only by way of non-limitative example in the accompanying drawings, wherein:
figure 1 is a block diagram of the apparatus according to the invention;
figure 2 is a detailed block diagram of the elements constituting one of the blocks of figure 1;
figures 3 and 4 are additional detailed block diagrams of the operation of blocks shown in figure 1.

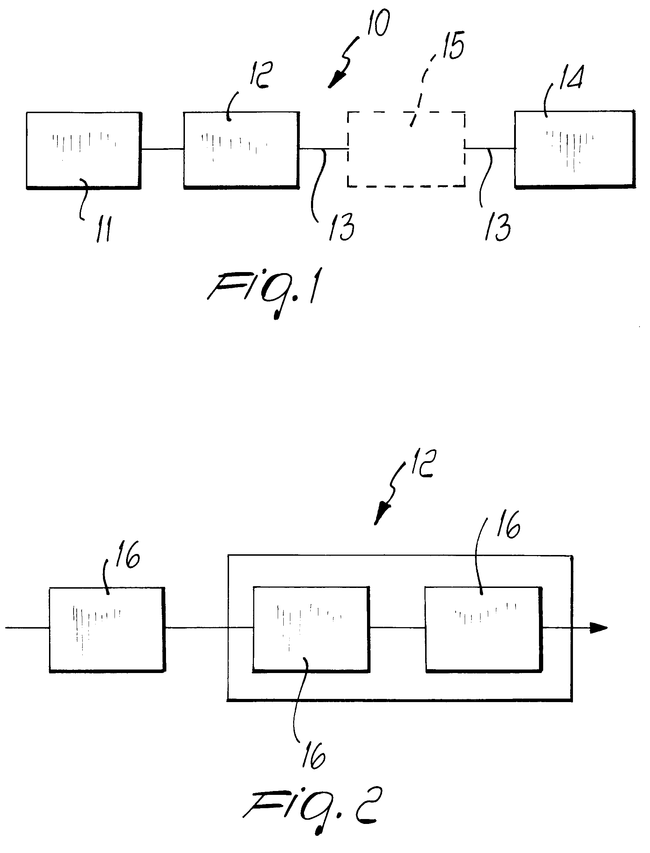

With particular reference to figures 1 to 4, an apparatus for digital transmissions over optical fibers according to the invention is generally designated by the reference numeral 10.

The apparatus 10 comprises a per se known laser transmitter 11, which can be, without entailing any difference, of the type operating in the spectrum range between 1500 and 1600 nanometers.

It is furthermore possible to use, without any difference, a laser that emits a train of pulses or a laser that emits continuous radiation.

In this last case, conveniently, the laser 11 is followed by an external device capable of converting the continuous radiation into a train of pulses (not shown in the figures).

The laser transmitter 11 generates light pulses that are fed into a polarization modulator 12.

The polarization modulator 12, by means of a line 13 made of optical fibers that can be equally of the step index or of the dispersion shifted type, sends the signal to a receiver 14.

For transmission lengths over 60 km, it is convenient to introduce one or more amplifiers 15 (only one is shown in the figures).

As regards the amplifiers 15, they can be of the semiconductor type or of the erbium-doped fiber type.

The amplifiers 15 are conveniently followed by an optical filter, not shown in the figures, which can be either of the sliding or of the fixed-frequency type.

In the case of fixed-frequency filters, it is recommendable to use an optical frequency translation unit.

With particular reference to figure 2, the execution of the polarization modulator 12 is analyzed in greater detail.

The polarization modulator 12 is constituted by polarization rotators 16, the number whereof is variable according to the levels of the system.

In this case, for a four-level system, two polarization rotators 16 are provided.

More specifically, one polarization rotator 16 rotates the light pulse equal to 90 sexagesimal degrees, whereas the other polarization rotator 16 produces a polarization rotation of the light pulse equal to 45 sexagesimal degrees.

By means of the combination of the polarization rotators 16 it is possible to modulate the polarization, in this case, of the light pulse, according to four polarization levels, the angles whereof are respectively 22.5 sexagesimal degrees, 67.5 sexagesimal degrees, 112.5 sexagesimal degrees, and 157.5 sexagesimal degrees.

As regards the receiver 14 (figure 3), it is constituted by a polarization controller 17 that feeds the signal into a coupler device 18.

The coupler device 18 diverts, in this case, the signal along two lines, both of which have the same components; therefore, only one of said lines is described herein.

One of the two lines along which the signal is fed comprises a circuit 19 for measuring Stokes's parameter which then feeds the signal into a per se known threshold device 20.

The dashed line of figure 3 divides the optical part from the electrical one.

The threshold device 20 then feeds the signal into a series/parallel selector device 21 which is also of a per se known type.

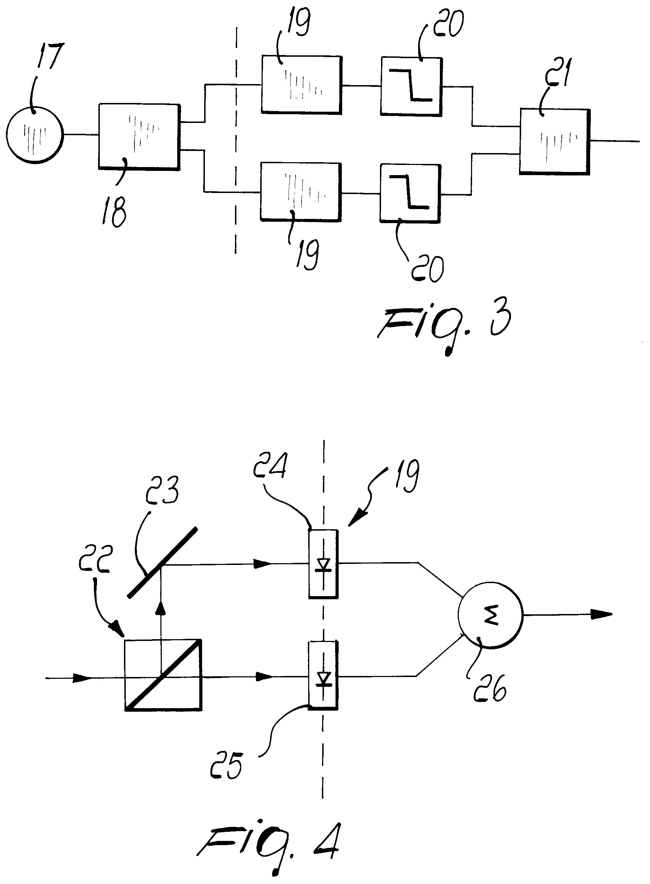

With particular reference to figure 4, the dashed line delimits the optical part and the electrical part of a circuit 19 for measuring Stokes's parameter; the circuit is constituted by a beam splitter 22 that separates the two perpendicular polarization components of the beam, diverting them along two paths.

A first path reaches a mirror 23 that reflects the light beam towards a photodiode 24.

The second light beam continues along its path and directly strikes another photodiode 25.

The light signals entering the photodiodes 24 and 25 are converted into electrical pulses, which are fed into an adder device 26 that provides, in output, the value of Stokes's parameter.

In practice, operation is as follows: the laser transmitter 11 emits a sequence of pulses or a train of pulses having a given polarization.

The pulses are fed into the polarization modulator 12, which, by means of the polarization rotators 16, rotates the polarization of said pulses according, in this case, to four polarization levels.

An item of information, in this case composed of two bits, corresponds to each one of the polarization levels.

Once it has left the polarization modulator 12, the signal is sent to the line 13 and optionally amplified by means of amplifiers 15.

The signal then reaches, at the end of the line 13, a receiver 14 which in addition to decoding and translating the light signal, by transferring the polarizations that represent the levels of the light pulse onto the equatorial plane of Poincaré's sphere, measures Stokes's parameter by means of the circuits 19.

In practice it has been observed that the present invention has achieved the intended aim and objects.

In particular, the apparatus uses, in order to reduce the effects of chromatic dispersion, the non-linear effects, which provide perfect compensation of the time spread of the pulse, with the result that it is possible to achieve a transmission in which the time shape of the pulse remains unchanged as propagation continues.

Furthermore, the apparatus according to the invention is also capable of utilizing the lines and networks produced with step index fibers, which are now no longer in use.

Another advantage of the present invention is to provide a multilevel transmission which does not require particular devices, since it can be provided with simple combinations of devices that are already commercially available.

The present invention is susceptible of numerous modifications and variations, all of which are within the scope of the inventive concept; thus, for example, it is possible to adopt a polarization modulator that performs an elliptical polarization, with a consequent increase in transmission levels.

All the details may furthermore be replaced with other technically equivalent elements.

The materials as well as the dimensions may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Apparatus for digital transmissions over optical fibers, characterized in that it comprises, in a non-linear propagation mode, the following combination of elements:
-- a laser transmitter;
-- a polarization modulator;
-- a sequence of optical fibers;
-- a receiver with polarization controller.

2. Apparatus according to claim 1, characterized in that it comprises one or more amplifiers.

3. Apparatus according to claim 2, characterized in that said one or more amplifiers are of the semiconductor or of the erbium-doped fiber type.

4. Apparatus according to claim 2, characterized in that each one of said one or more amplifiers is followed by an optical filter.

5. Apparatus according to claim 4, characterized in that said optical filter is of the sliding or fixed frequency type.

6. Apparatus according to claims 4 and 5, characterized in that it comprises, if said filter is of the fixed-frequency type, a corresponding optical frequency translator.

7. Apparatus according to claim 1, characterized in that said optical fibers are of the step index or dispersion shifted type.

8. Apparatus according to claim 1, characterized in that said polarization modulator can be of the type providing straight polarizations or elliptical polarizations.

9. Apparatus according to one or more of the preceding claims, characterized in that said laser transmitter is of the type that emits a continuous radiation or a train of pulses and emits pulses with a wavelength within the range between 1500 and 1600 nanometers.

10. Apparatus according to claim 9, characterized in that it comprises, if said laser is of the type that emits a continuous radiation, an external device, of a per se known type, capable of converting the continuous radiation into a train of pulses.

11. Apparatus according to one or more of the preceding claims, characterized in that said receiver with polarization controller is of the type adapted to transfer the polarizations that represent the levels of the light pulse onto the equatorial plane of Poincaré's sphere.

12. Apparatus according to one or more of the preceding claims, characterized in that said receiver comprises at least one circuit for measuring Stokes's parameter.
